(19) Europäisches Patentamt

European Patent Office

Office européen des brevets

(11) **EP 1 626 582 A2**

(12) **EUROPEAN PATENT APPLICATION**
published in accordance with Art. 158(3) EPC

(43) Date of publication:
**15.02.2006 Bulletin 2006/07**

(51) Int Cl.:
*H04N 7/18* (1968.09)    *G06T 1/00* (1995.01)
*G08G 1/04* (1968.09)

(21) Application number: **02714498.9**

(22) Date of filing: **05.04.2002**

(86) International application number:
**PCT/JP2002/003441**

(87) International publication number:
**WO 2002/091746 (14.11.2002 Gazette 2002/46)**

(84) Designated Contracting States:
**AT BE CH CY DE DK ES FI FR GB GR IE IT LI LU
MC NL PT SE TR**

(30) Priority: **27.04.2001  JP  2001132256**

(71) Applicant: **Sumitomo Electric Industries, Ltd.
Osaka-shi,
Osaka 541-0041 (JP)**

(72) Inventors:
• **IWAMOTO, Takeshi
  Minato-ku,
  Tokyo 107-0051 (JP)**

• **ITO, Yoshiyuki
  Bunkyo-ku,
  Tokyo 112-0014 (JP)**
• **SUZUKI, Kunihiko
  Matsudo-shi, Chiba 270-2231 (JP)**

(74) Representative: **Cross, Rupert Edward Blount
BOULT WADE TENNANT,
Verulam Gardens
70 Gray's Inn Road
London WC1X 8BT (GB)**

(54) **IMAGE PROCESSING DEVICE, IMAGE PROCESSING METHOD AND VEHICLE MONITOR SYSTEM**

(57)    A plurality of surveillance cameras 2 are set to take a picture of vehicle 11 running on road 10, input signals are video signals of pictures taken by the respective surveillance cameras 2, A/D conversion is effected from the video signals into digital images, the digital images are transformed so as to direct the road 10 along a longitudinal direction or a transverse direction of the digital images, image correction is made so as to reduce distortion of vehicle 11 in the transformed images thus transformed, and the images thus corrected is combined into such a synthetic image as to make the road 10 continuous, and the resultant image is displayed on monitor 61. This makes it feasible to provide an image processing apparatus, an image processing method, and a vehicle surveillance system achieving improvement in detection of traffic anomaly.

*Fig.1*

## Description

Technical Field

The present invention relates to an image processing apparatus, an image processing method, and a vehicle surveillance system used in traffic surveillance or the like.

Technical Field

In general, for surveillance of traffic, CCTV (closed-circuit television) cameras are set up for highways, open roads, and so on. Particularly, long tunnels or the like are equipped with a number of cameras in order to avoid a blind spot of surveillance. Output pictures of these cameras are transmitted to a road control center or the like and are displayed on monitors to be observed by observers. Since it is normally difficult in terms of a setting space or the like to set up the monitors in the same number as the number of cameras thus set, the number of set monitors is smaller than the number of set cameras and the camera pictures are displayed with multiple cameras being allocated to a monitor. In this case, the display is implemented by a display technique of switching among a plurality of camera pictures one from another every several seconds.

Disclosure of the Invention

However, this traffic surveillance technique involves a problem of delay in detection of traffic anomaly. Namely, since the camera pictures are displayed in the switching manner on the monitor, there exist camera pictures not displayed for a moment, which can induce a delay in detection of traffic anomaly. It is also pointed out that there is another problem that the frequent switching among the camera pictures exhausts the observers.

In order to solve these problems, research has been made on introduction of the image processing technology, but the circumstances were that it was technically difficult to detect the traffic anomaly with absolute precision.

The present invention has been accomplished in order to solve the problems as discussed above, and an object of the invention is to provide an image processing apparatus, an image processing method, and a vehicle surveillance system that facilitate detection of traffic anomaly.

In order to achieve the above object, an image processing apparatus according to the present invention comprises A/D conversion means for receiving input video signals of pictures of a road and effecting A/D conversion from the video signals into digital images; image transformation means for transforming the digital images so as to direct the road along a longitudinal direction or a transverse direction of the digital images; image correction means for extracting a vehicle running on the road in the transformed images transformed by the image transformation means and making a correction for an image of the vehicle according to a vehicle height of the vehicle; and image combination means for combining the plurality of corrected images into such a synthetic image as to make continuous roads displayed in the respective corrected images corrected by the image correction means.

The image processing apparatus according to the present invention is also characterized in that the aforementioned image correction means makes such a correction that the image of the vehicle is more demagnified with increase in the vehicle height of the vehicle.

The image processing apparatus according to the present invention is also characterized in that vehicle height data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle height data set for the specified vehicle.

The image processing apparatus according to the present invention is also characterized in that the aforementioned image correction means makes the correction for the image of the vehicle according to a vehicle width of the vehicle.

The image processing apparatus according to the present invention is also characterized in that vehicle width data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle width data set for the specified vehicle.

The image processing apparatus according to the present invention is also characterized in that the aforementioned image correction means makes the correction for the image of the vehicle according to a vehicle length of the vehicle.

The image processing apparatus according to the present invention is also characterized in that vehicle length data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle length data set for the specified vehicle.

An image processing method according to the present invention comprises an A/D conversion step of receiving input video signals of pictures of a road and effecting A/D conversion from the video signals into digital images; an image transformation step of transforming the digital images so as to direct the road along a longitudinal direction or a transverse direction of the digital images; an image correction step of extracting a vehicle running on the road in the transformed images transformed by the image transformation step and making a correction for an image of the vehicle according to a vehicle height of the vehicle; and an image combination step of combining a plurality of corrected images into such a synthetic image as to make continuous roads displayed in the respective corrected images corrected by the image correction step.

The image processing method according to the present invention is also preferably configured so that the aforementioned image correction step is arranged to make such a correction that the image of the vehicle is more demagnified with increase in the vehicle height of the vehicle.

The image processing method according to the present invention is also preferably configured so that vehicle height data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle height data set for the specified vehicle.

The image processing method according to the present invention is also preferably configured so that the aforementioned image correction step is arranged to make the correction for the image of the vehicle according to a vehicle width of the vehicle.

The image processing method according to the present invention is also preferably configured so that vehicle width data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle width data set for the specified vehicle.

The image processing method according to the present invention is also preferably configured so that the aforementioned image correction step is arranged to make the correction for the image of the vehicle according to a vehicle length of the vehicle.

The image processing method according to the present invention is also preferably configured so that vehicle length data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle length data set for the specified vehicle.

A vehicle surveillance system according to the present invention comprises a plurality of imaging means disposed along a road to be observed and configured to take a picture of a vehicle running on the road; vehicle height detecting means set at the road and configured to detect a vehicle height of the vehicle; image processing means configured to receive input video signals of pictures taken by the imaging means, effect A/D conversion from the video signals into digital images, transform the digital images so as to direct the road along a longitudinal direction or a transverse direction of the digital images, extract a vehicle running on the road in the transformed images thus transformed, make a correction for an image of the vehicle according to a vehicle height of the vehicle, and combine a plurality of corrected image into such a synthetic images as to make continuous roads displayed in the respective corrected images thus corrected; and display means configured to display an image resulting from image processing by the image processing means.

The vehicle surveillance system according to the present invention is preferably configured so that the aforementioned imaging means take pictures of the road from diagonally above and the aforementioned image processing means makes such a correction that the image of the vehicle is more demagnified with increase in the vehicle height of the vehicle.

The vehicle surveillance system according to the present invention is also preferably configured so that the aforementioned vehicle height detecting means is located at least at an entrance of a surveillance area and so that the aforementioned image processing means sets vehicle height data for each vehicle displayed in the digital images or in the transformed images, specifies the aforementioned vehicle on the basis of the image of the vehicle upon the correction for the image of the vehicle, and makes the correction for the image of the vehicle on the basis of the vehicle height data set for the specified vehicle.

The vehicle surveillance system according to the present invention is also preferably configured so that the aforementioned image processing means makes the correction for the image of the vehicle according to a vehicle width of the vehicle.

The vehicle surveillance system according to the present invention is also preferably configured so that vehicle width data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle width data set for the specified vehicle.

The vehicle surveillance system according to the present invention is also preferably configured so that the aforementioned image processing means makes the correction for the image of the vehicle according to a vehicle length of the vehicle.

The vehicle surveillance system according to the present invention is also preferably configured so that vehicle length data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle length data set for the specified vehicle.

According to these aspects of the invention, a plurality of pictures of a road are combined into one synthetic image to display an area to be subjected to surveillance of traffic, without need for switching of screen display, so as to prevent the delay in detection of traffic anomaly, and the image of the vehicle in the surveillance area is corrected according to the vehicle height or the like thereof, so as to make the image of the vehicle easy on the eyes. This facilitates the visual detection of traffic anomaly and thus reduces the load of surveillance.

The vehicle height data or the like is set for each vehicle displayed in the image, a vehicle is specified upon the correction for the image, and the correction for the image of the vehicle is effected on the basis of the vehicle height data or the like, whereby the correction for each vehicle can be made, without need for setting sensors for detecting the vehicle height of the vehicle or the like at all picture taking locations in the case where pictures are taken at a plurality of positions. This reduces the number of set sensors for detecting the vehicle height or the like.

Another image processing apparatus according to the present invention comprises A/D conversion means for receiving input video signals of pictures of a road and effecting A/D conversion from the video signals into digital images; image transformation means for transforming the digital images so as to direct the road along a longitudinal direction or a transverse direction of the digital images; image combination means for combining a plurality of transformed images into such a synthetic image as to make continuous road images in the respective transformed images transformed by the image transformation means; and special display means for effecting special display on a specific vehicle among vehicles in the synthetic image synthesized by the image combination means.

In the image processing apparatus according to the present invention, preferably, the aforementioned specific vehicle comprises some or all of a hazardous material loaded truck, an expressway squad car, a squad car, a fire engine, and so on.

Another image processing apparatus according to the present invention comprises A/D conversion means for receiving input video signals of pictures of a road and effecting A/D conversion from the video signals into digital images; image transformation means for transforming the digital images so as to direct the road along a longitudinal direction or a transverse direction of the digital images; image combination means for combining a plurality of transformed images into such a synthetic image as to make continuous road images in the respective transformed images transformed by the image transformation means; and special display means for effecting special display on an abnormal event on the road in the synthetic image synthesized by the image combination means.

In the image processing apparatus according to the present invention, preferably, the aforementioned abnormal event comprises some or all of a stop of a vehicle, a refuge run of a vehicle, a fallen object, fire, and so on.

The image processing apparatus according to the present invention is characterized by comprising storage means for storing the synthetic image in the form of image data.

Another image processing method according to the present invention comprises an A/D conversion step of receiving input video signals of pictures of a road and effecting A/D conversion from the video signals into digital images; an image transformation step of transforming the digital images so as to direct the road along a longitudinal direction or a transverse direction of the digital images; an image combination step of combining a plurality of transformed images into such a synthetic image as to make continuous road images in the respective transformed images transformed by the image transformation step; and a special display step of effecting special display on a specific vehicle among vehicles in the synthetic image synthesized by the image combination step.

In the image processing method according to the present invention, preferably, the aforementioned specific vehicle comprises some or all of a hazardous material loaded truck, an expressway squad car, a squad car, a fire engine, and so on.

Another image processing method according to the present invention comprises an A/D conversion step of receiving input video signals of pictures of a road and effecting A/D conversion from the video signals into digital images; an image transformation step of transforming the digital images so as to direct the road along a longitudinal direction or a transverse direction of the digital images; an image combination step of combining a plurality of transformed images into such a synthetic image as to make continuous road images in the respective transformed images transformed by the image transformation step; and a special display step of effecting special display on an abnormal event on the road in the synthetic image synthesized by the image combination step.

In the image processing method according to the present invention, preferably, the aforementioned abnormal event comprises some or all of a stop of a vehicle, a refuge run of a vehicle, a fallen object, fire, and so on.

In the image processing method according to the present invention, a storage step of storing the synthetic image in the form of image data is preferably carried out after the image combination step.

Another vehicle surveillance system according to the present invention comprises a plurality of imaging means disposed along a road to be observed and configured to take a picture of a vehicle running on the road; specific vehicle detecting means configured to detect a specific vehicle on the road; image processing means configured to receive input video signals of pictures taken by the imaging means, effect A/D conversion from the video signals into digital images, transform the digital images so as to direct the road along a longitudinal direction or a transverse direction of the digital images, combine a plurality of transformed images into such a synthetic image as to make continuous road images in the respective transformed images thus transformed, and effect special display on the specific vehicle on the synthetic image; and display means configured to display an image resulting from image processing by the image processing means.

In the vehicle surveillance system according to the present invention, preferably, the aforementioned specific vehicle comprises some or all of a hazardous material loaded truck, an expressway squad car, a squad car, a fire engine, and so on.

Another vehicle surveillance system according to the present invention comprises a plurality of imaging means disposed along a road to be observed and configured to take a picture of a vehicle running on the road; abnormal event detecting means configured to detect an abnormal event on the road; image processing means configured to receive input video signals of pictures taken by the imaging means, effect A/D conversion from the video signals into digital images, transform the digital images so as to direct the road along a longitudinal direction or a transverse direction of the digital images, combine a plurality of transformed images into such a synthetic image as to make continuous road images in the respective transformed images thus transformed, and effect special display on the abnormal event on the synthetic image; and display means configured to display an image resulting from image processing by the image processing means.

In the vehicle surveillance system according to the present invention, preferably, the aforementioned abnormal event comprises some or all of a stop of a vehicle, a refuge run of a vehicle, a fallen object, fire, and so on.

The vehicle surveillance system according to the present invention is also characterized in that the aforementioned image processing means stores the synthetic image in the form of image data.

Furthermore, in the vehicle surveillance system according to the present invention, the aforementioned display means is preferably a projector having a horizontally long display area.

According to these aspects of the invention, a plurality of pictures of a road is combined into one synthetic image to display an area to be subjected to traffic surveillance on one screen, without need for switching of screen display; a specific vehicle such as a hazardous material loaded truck or the like, or an abnormal event such as a stop of a vehicle, fire, or the like is displayed by special display on the screen whereby the specific vehicle or the abnormal event can be readily detected by visual inspection. This enables speedy detection of the specific vehicle or the abnormal event. It also reduces the load of surveillance by visual inspection.

Brief Description of the Drawings

Fig. 1 is an illustration of the vehicle surveillance system according to the first embodiment of the present invention.
Fig. 2 is a flowchart showing the operation of the image processing apparatus according to the first embodiment.
Fig. 3 is an illustration of image processing in the image transformation process of Fig. 2.
Fig. 4 is an illustration of a digital image after A/D conversion in the image processing apparatus according to the first embodiment.
Fig. 5 is an illustration of a transformed image after image transformation in the image processing apparatus according to the first embodiment.
Fig. 6 is an illustration of a corrected image after image correction in the image processing apparatus according to the first embodiment.
Fig. 7 is an illustration of a synthetic image after image combination in the image processing apparatus according to the first embodiment.
Fig. 8 is an illustration of the vehicle surveillance system according to the third embodiment.
Fig. 9 is a flowchart showing the operation of the image processing apparatus according to the third embodiment.
Fig. 10 is an illustration of a synthetic image after image combination in the image processing apparatus according to the third embodiment.
Fig. 11 is a flowchart showing the operation of the image processing apparatus according to the fifth embodiment.

Best Mode for Carrying out the Invention

Embodiments of the present invention will be described below on the basis of the accompanying drawings. The same reference symbols will denote the same elements throughout the drawings, without redundant description thereof. It is also noted that the dimensional ratios in the drawings do not always agree with those in the description.

(First Embodiment)

The following is the description of the image processing apparatus, image processing method, and vehicle surveillance system according to the first embodiment of the present invention.

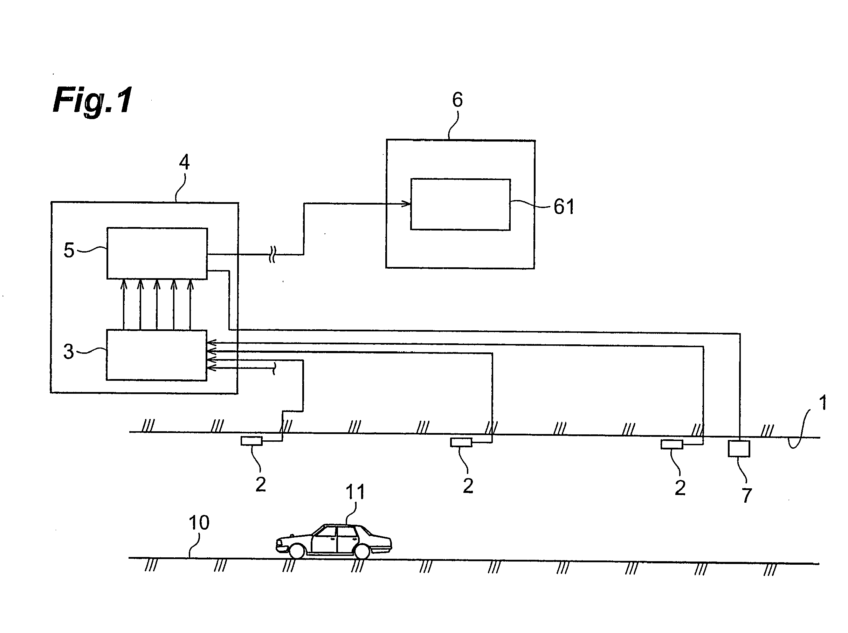

Fig. 1 is an illustration of the vehicle surveillance system according to the present embodiment. As shown in Fig. 1, the vehicle surveillance system is a system for observing a traffic condition of a road and is applied, for example, to a system of detecting traffic anomaly or the like in tunnel 1. The vehicle surveillance system incorporates a plurality of surveillance cameras 2.

The surveillance cameras 2 are imaging means for taking a picture of vehicle 11 running on road 10 in tunnel 1 and are set up at regular intervals in the tunnel 1. The setting intervals of the surveillance cameras 2 are, for example, about 200 m. The surveillance cameras 2 are set at the upper part in the tunnel 1 and are arranged to take a picture of the vehicle 11 running on the road 10, from diagonally above in front of or behind it. Each surveillance camera 2 is connected to distributor 3. The distributor 3 is set inside facility 4 built near the tunnel 1, and is configured to receive pictures taken by the respective surveillance cameras 2 and output them to image processing apparatus 5.

The image processing apparatus 5 is an image processing means for receiving the pictures of the surveillance cameras 2 and effecting image processing thereon, and transmits an image obtained by the image processing, to control center 6. The image processing apparatus 5 is composed, for example, of an A/D (analogue-to-digital) converter, a video frame memory, an image processing processor, and a signal output interface.

The A/D converter is a device for effecting A/D conversion from an analogue signal to a digital signal on each input video signal, and is, for example, a video A-D converter or the like. The video frame memory is a memory for storing digital converted video signals in the form of image data. The image data is an assembly of pixels with density values at respective coordinate points on the x-axis and on the y-axis, and the density of the pixels is represented, for example, by 8-bit 256 gray levels.

The image processing processor is a processor for effecting image processing on the image data stored in the video frame memory. The signal output interface is an interface for outputting an image obtained by the image processing, to the outside in response to a command from the image processing processor.

In the control center 6, the image transmitted from the image processing apparatus 5 is fed to monitor 61, and the picture in the tunnel 1 is displayed through the monitor 61. Through this image, an observer can visually observe running states of vehicles in the tunnel 1. The monitor 61 is a display means for display of the image and is preferably one having a horizontally long or vertically long display area; for example, a projector is used.

Vehicle height sensor 7 is provided in the tunnel 1. The vehicle height sensor 7 is a vehicle height detector for detecting the vehicle height of vehicle 11 and is set above the road 10. The vehicle height sensor 7 is, for example, an ultrasonic sensor. The ultrasonic sensor is a sensor configured to emit an ultrasonic sound from above toward the vehicle 11, detect a reflected wave thereof from the vehicle 11, and thereby detect the position of the top edge of the vehicle 11.

The vehicle height sensor 7 is set at least at an entrance of a surveillance area in the vehicle surveillance system. For example, where there is no merging road or the like in the surveillance area, the sensor is located only at the entrance of the surveillance area.

The vehicle height sensor 7 can be one for implementing stereoscopic image processing with two photographing cameras, or can be a laser ranging device or a radio ranging device. Furthermore, the sensor 7 may also be any other sensor than the ultrasonic sensor as long as it can detect the vehicle height of the vehicle 11 running on the road 10.

The following is the description of the operation of the vehicle surveillance system, the operation of the image processing apparatus, and the image processing method.

In Fig. 1, the surveillance cameras 2 take pictures of vehicle 11 running on the road 10 and video signals from the respective surveillance cameras 2 are fed into the distributor 3. The distributor 3 supplies the video signals of the surveillance cameras 2 to the image processing apparatus 5 at appropriate timing.

On the other hand, the vehicle height sensor 7 detects the vehicle height of vehicle 11 running on the road 10 and a detection signal thereof is fed to the image processing apparatus 5. Then the image processing apparatus 5 effects the image processing on the video signals.

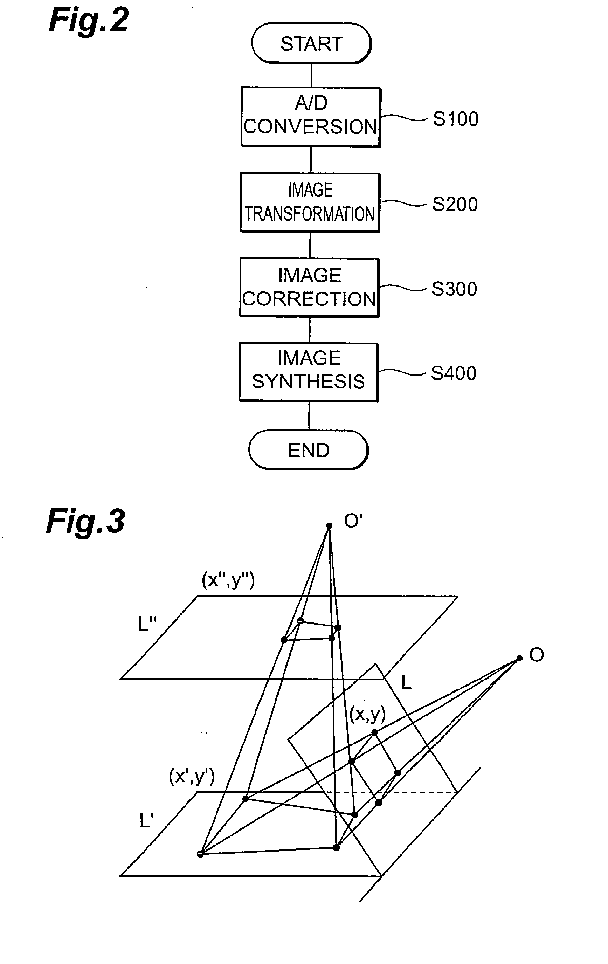

Fig. 2 shows the flowchart of the image processing in the image processing apparatus 5.

As shown at S100 in Fig. 2, each video signal supplied to the image processing apparatus 5 is subjected to A/D conversion. The A/D conversion is a process of converting an analogue signal of each video signal into a digital signal, and each digital signal after the conversion is stored in the form of image data into the video frame memory.

Then the flow moves to S200 to implement image transformation. The image transformation is a process of transforming image data of each digital image after the A/D conversion so as to direct the road 10 displayed in each digital image, along a longitudinal direction or a transverse direction of the image.

For example, the image transformation process is implemented so that the image view point (center of projection) of surveillance camera 2 is moved from the camera setting position to above the road whereby the digital image after the A/D conversion is converted into an image with a field angle to look down the road.

Specifically, as shown in Fig. 3, a point (x,y) on plane L of a digital image is projected onto a point (x',y') on another plane L' with respect to a projection center O, and thereafter the point (x',y') is projected onto a point (x",y") on another plane L" with respect to a new projection center O'. For example, the transformation from plane L onto plane L' is expressed by Eqs (1) and (2) below, and the transformation from plane L' onto plane L" is expressed by Eqs (3) and (4) below.

In Eqs (1)-(4) b1-b8, b1'-b8' are transformation parameters and are properly set according to the setting position, the picture taking direction, etc. of the surveillance camera 2.

[Math 1]

$$x' = \frac{b_1 \cdot x + b_2 \cdot y + b_3}{b_7 \cdot x + b_8 \cdot y + 1} \quad \cdots (1)$$

[Math 2]

$$y' = \frac{b_4 \cdot x + b_5 \cdot y + b_6}{b_7 \cdot x + b_8 \cdot y + 1} \quad \cdots (2)$$

[Math 3]

$$x'' = \frac{(b_6' \cdot b_8' - b_5')x' - (b_3' \cdot b_8' + b_2')y' + (b_3' \cdot b_5' - b_2' \cdot b_6')}{(b_5' \cdot b_7' - b_4' \cdot b_8')x' - (b_1' \cdot b_8' - b_2' b_7')y' + (b_2' \cdot b_4' - b_1' \cdot b_5')} \quad \cdots (3)$$

[Math 4]

$$y'' = \frac{-(b_6' \cdot b_7' - b_4')x' - (b_3' \cdot b_7' + b_1')y' - (b_3' \cdot b_4' - b_1' \cdot b_6')}{(b_5' \cdot b_7' - b_4' \cdot b_8')x' + (b_1' \cdot b_8' - b_2' b_7')y' + (b_2' \cdot b_4' - b_1' \cdot b_5')} \quad \cdots (4)$$

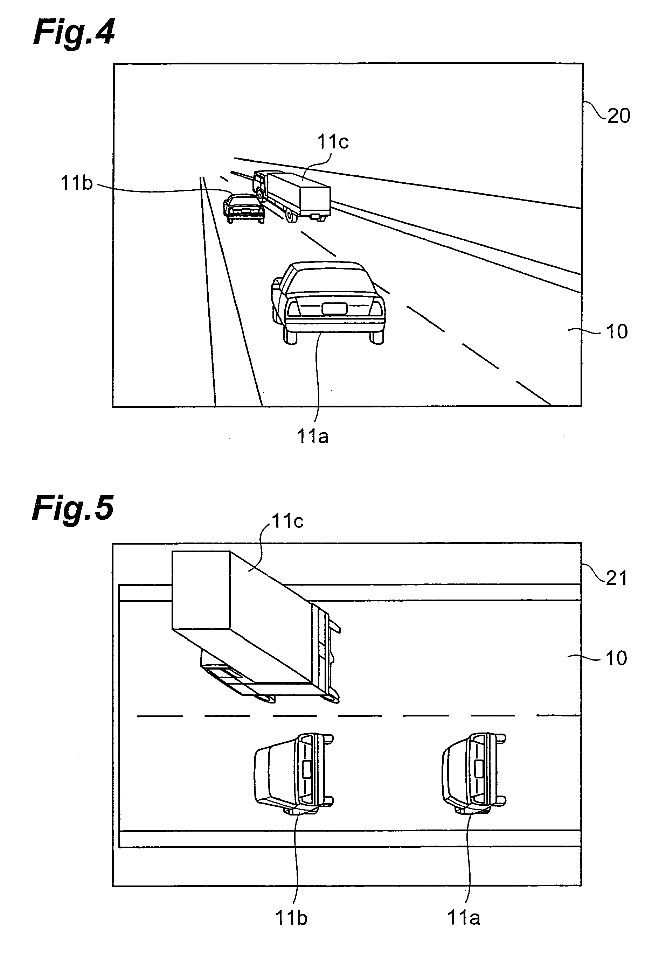

Through this image transformation process, a digital image shown in Fig. 4 is transformed into a transformed image shown in Fig. 5. In Fig. 4, the digital image 20 shows the road 10 as if to run away from the lower right part toward the upper left part. This digital image 20 is transformed so that the road 10 is directed along a horizontal direction of the image, as shown in Fig. 5, and it is transformed into transformed image 21 by the transformation process. This image transformation process also transforms vehicles 11a-11b running on the road 10.

At this time, images of the vehicles 11b, 11c running farther away from the picture taking position tend to be more distorted by the image transformation process than an image of the vehicle 11a running nearer to the taking position, as shown in Fig. 5. Particularly, the distortion is significant of the vehicle 11c such as a truck with a large vehicle height.

Then the flow moves to S300 to effect image correction. The image correction is a process of properly extracting the vehicle 11 running on the road 10 in each transformed image 21 transformed by the image transformation process and making correction for the image of the vehicle 11 according to the vehicle height of the vehicle 11.

The image correction process is carried out based on vehicle height data detected by the vehicle height sensor 7, and is executed so that the image of the vehicle 11 is more demagnified with increase in the vehicle height of the vehicle 11. For example, the image correction process is implemented so that an image of an extracted vehicle is subjected to image transformation using Eqs (1)-(4) so as to decrease the distortion. In this case, the parameters b1-b8, b1'-b8' in Eqs (1)-(4) are properly selected so as to decrease the distortion of the image according to the vehicle height data.

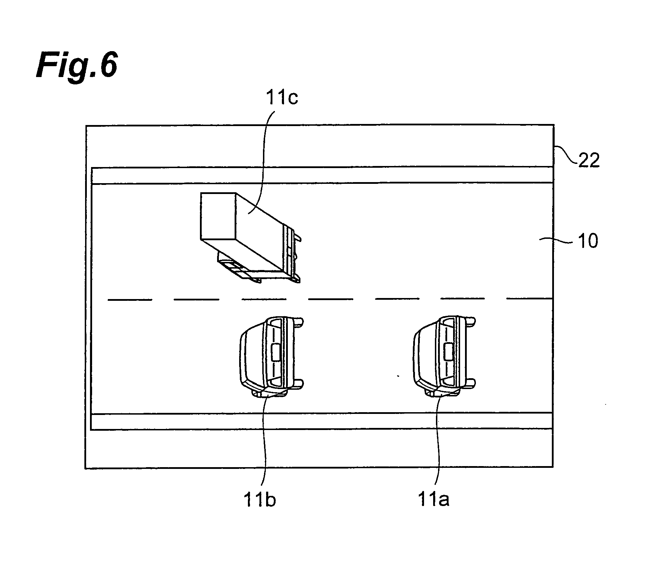

When the image correction process is carried out in this way, the transformed image shown in Fig. 5 is corrected into a corrected image shown in Fig. 6, whereby the images of vehicles 11b, 11c distorted by the image transformation process are corrected into appropriate images.

The image correction as described above is effected on each of the images obtained through the A/D conversion and the image transformation from the video signals of pictures taken by the respective surveillance cameras 2, and the image correction for them is preferably carried out in such a manner that corresponding vehicle height data is set for each vehicle 11, a vehicle 11 is specified on the basis of an image of the vehicle 11 on the occasion of making the correction for the image of the vehicle 11, and the correction is made for the image of the vehicle 11 on the basis of the vehicle height data set for the vehicle 11 thus specified.

This process of tracking the vehicle 11 to be corrected obviates the need for repeatedly carrying out the detection of vehicle height for the same vehicle 11 imaged with some time difference by the surveillance cameras 2 and obviates the need for setting the vehicle height sensor 7 at every surveillance camera 2. Accordingly, this configuration decreases the number of set vehicle height sensor 7 and thus reduces the cost of the vehicle surveillance system.

In this case, a vehicle height sensor 7 may be set only at the entrance of the surveillance area, or a plurality of vehicle height sensors 7 may be set at predetermined intervals. In the case where the surveillance area includes a merging road or the like, it is desirable to set the vehicle height sensors at the entrance position and at the merging position of the surveillance area.

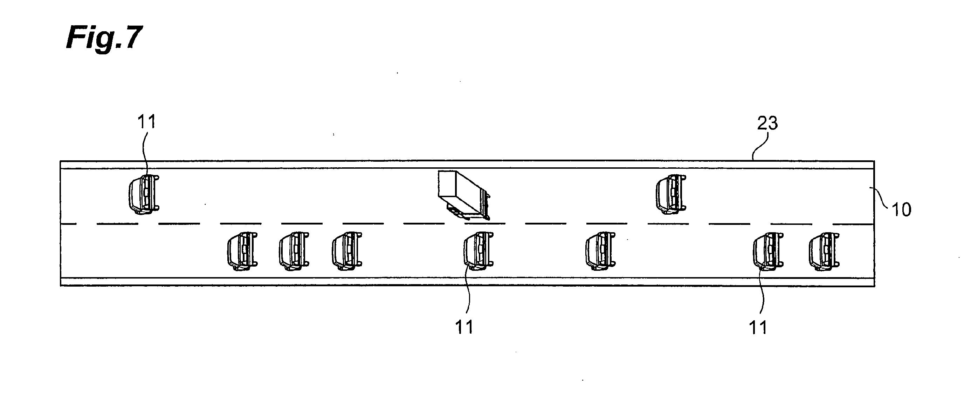

Then the flow moves to S400 in Fig. 2 to effect image composition. The image composition is a process of combining the corrected images resulting from the image correction, into a synthetic image; for example, corrected images 22 from the video signals of pictures simultaneously taken by the respective surveillance cameras 2 are combined into one synthetic image. At this time, the composition process is carried out so as to make pieces of the road 10 in the respective corrected images 22 continuous. The composition is also carried out so as to avoid redundant display of identical vehicle 11. Fig. 7 shows synthetic image 23 obtained by the image combination process.

After completion of the image combination process, the synthetic image 23 is then transmitted to the control center 6. Then the whole of the synthetic image 23 is displayed on the monitor 61 in the control center 6.

By the image processing apparatus, image processing method, and vehicle surveillance system of the present embodiment, as described above, a plurality of pictures of the road 10 are combined into one synthetic image to display the area to be subjected to traffic surveillance, without need for switching of screen display, whereby the delay is prevented in the detection of traffic anomaly; the image of the vehicle 11 in the surveillance area is corrected according to the vehicle height or the like thereof, whereby the image of the vehicle 11 can be easy on the eyes. This facilitates the visual detection of traffic anomaly and decreases the load of surveillance.

By the configuration of setting the vehicle height data or the like for each vehicle 11 displayed on the image, specifying the vehicle 11 on the occasion of making the correction for the image of the vehicle 11, and making the correction for the image of the vehicle 11 on the basis of the vehicle height data or the like, it becomes feasible to make the correction for the vehicle 11, without need for setting the sensors for detecting the vehicle height of the vehicle 11, at all the taking positions in the case where pictures are taken at plural locations. This decreases the number of set sensors for detecting the vehicle height.

The image processing apparatus, image processing method, and vehicle surveillance system of the present embodiment were described in the structure in which the synthetic image 23 was transmitted to the control center 6, but the image processing apparatus, image processing method, and vehicle surveillance system according to the present invention do not have to be limited to such structure; for example, they may also be constructed in a configuration wherein the plurality of transformed images 21 or corrected images 22 are transmitted to the control center 6 and wherein the processing including the image combination thereof is carried out at the control center 6. In another configuration, the entire image processing (A/D conversion, image transformation, image correction, and image combination) is carried out at the control center 6.

The image processing apparatus, image processing method, and vehicle surveillance system of the present embodiment were described as those concerning the vehicle surveillance on the road in tunnel 1, but the image processing apparatus, image processing method, and vehicle surveillance system according to the present invention do not have to be limited to those; they may be those concerning vehicle surveillance on a road at another site.

(Second Embodiment)

The following is the description of the image processing apparatus, image processing method, and vehicle surveillance system according to the second embodiment.

The image processing apparatus, image processing method, and vehicle surveillance system according to the first embodiment were described as those configured to make correction for the image of vehicle 11 according to the vehicle height data of the vehicle 11, whereas the image processing apparatus, image processing method, and vehicle surveillance system according to the present embodiment are those configured to make correction for the image of the vehicle 11 according to vehicle width data and vehicle length data of the vehicle 11.

The vehicle width data and vehicle length data can be obtained by setting a vehicle width sensor and a vehicle length sensor at the road 10 and using outputs of those sensors. These vehicle width sensor and vehicle length sensor can be substantialized, for example, by a configuration of detecting the vehicle width and vehicle length by stereoscopic image processing with two imaging cameras.

The correction for the image of the vehicle 11 according to the vehicle width data and vehicle length data can be carried out in a similar fashion to the correction for the image of the vehicle 11 according to the vehicle height data as described in the first embodiment. At this time, the image correction is preferably made according to the vehicle width data and vehicle length data and according to the vehicle height data as well. In this case, the correction is better made to provide display of the synthetic image easier on the eyes than in the case where the image correction is made according to the vehicle height data.

Concerning the vehicle width data and vehicle length data, it is also desirable to set the vehicle width data and vehicle length data for each vehicle 11 displayed on the image, specify the vehicle 11 on the occasion of making the correction for the image of the vehicle 11, and make the correction for the image of the vehicle 11 on the basis of the vehicle width data and vehicle length data. In this case, it becomes feasible to make the correction for the vehicle 11, without need for setting the sensors for detecting the vehicle width and vehicle length of the vehicle 11, at all the taking positions in the case where pictures are taken at plural locations. This decreases the number of set sensors for detecting the vehicle width and vehicle length and thus reduces the cost of the vehicle surveillance system.

(Third Embodiment)

The following is the description of the image processing apparatus, image processing method, and vehicle surveillance system according to the third embodiment.

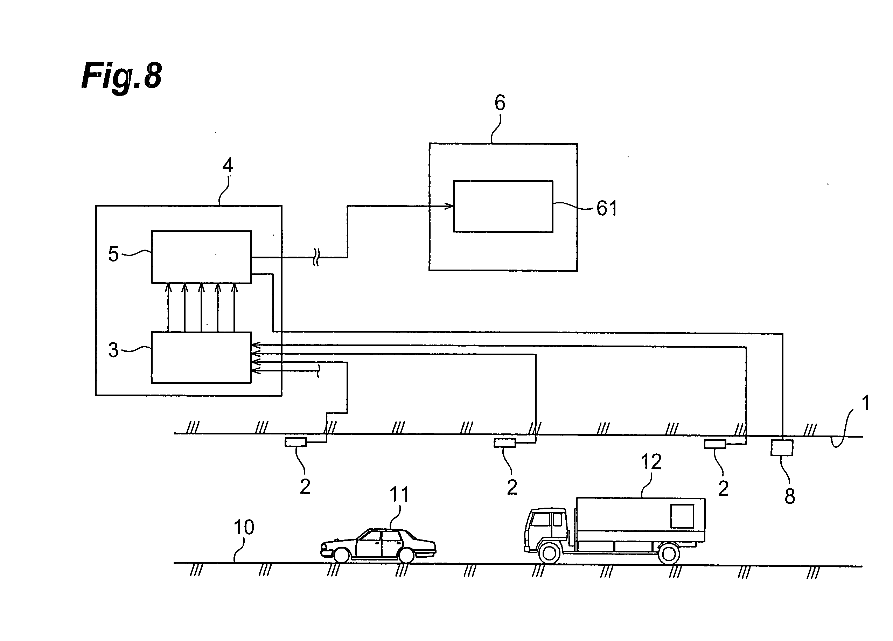

Fig. 8 is an illustration of the vehicle surveillance system according to the present embodiment. As shown in Fig. 8, the vehicle surveillance system of the present embodiment is constructed in much the same configuration as the vehicle surveillance system of the first embodiment, and is provided with specific vehicle detecting sensor 8 in place of the vehicle height sensor 7, thereby enabling easy detection of specific vehicle 12.

The specific vehicle detecting sensor 8 is a specific vehicle detecting means for detecting a specific vehicle on the road 10; for example, it is an imaging camera similar to the surveillance cameras 2. Whether a vehicle running on the road 10 is a specific vehicle is judged based on a picture taken by the imaging camera, so as to detect the specific vehicle.

Here the specific vehicle means a vehicle to be observed with special attention in view of traffic surveillance; for example, such specific vehicles include hazardous material loaded trucks, expressway squad cars, squad cars, fire engines, and so on. It is important in view of traffic surveillance to keep track of running positions of these specific vehicles.

In a preferred configuration, some or all of the surveillance cameras 2 are also used as specific vehicle detecting sensors 8 in view of cost reduction of the vehicle surveillance system.

The specific vehicle detecting means may also be one for detecting whether a vehicle is a specific vehicle 12, based on a vehicle information signal emitted from the vehicle. For example, whether or not a specific vehicle 12 is detected through road-vehicle bidirectional communication or the like between the vehicle side and the road side.

The following is the description of the operation of the vehicle surveillance system, the operation of the image processing apparatus, and the image processing method according to the present embodiment.

In Fig. 8, the surveillance cameras take pictures of vehicle 11 running on the road 10 and video signals from the respective surveillance cameras 2 are fed into the distributor 3. The distributor 3 supplies the video signals of the surveillance cameras 2 to the image processing apparatus 5 at appropriate timing.

On the other hand, the specific vehicle detecting sensor 8 takes a picture of specific vehicle 12 running on the road 10 and the picture is fed to the image processing apparatus 5. Then the image processing apparatus 5 performs the image processing of the video signals.

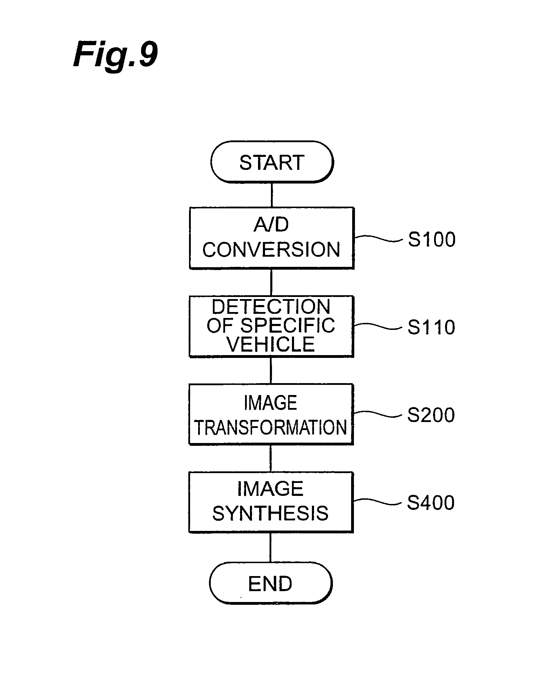

Fig. 9 shows the flowchart of the image processing in the image processing apparatus 5.

As shown at S 100 in Fig. 9, each video signal fed into the image processing apparatus 5 is subjected to A/D conversion, and S110 is to carry out the detection of specific vehicle 12. The detection of specific vehicle 12 is carried out, for example, by preliminarily entering image patterns of specific vehicles 12 in the image processing apparatus 5 and determining whether each digital image after the A/D conversion includes an equivalent to one of the image patterns of specific vehicles 12.

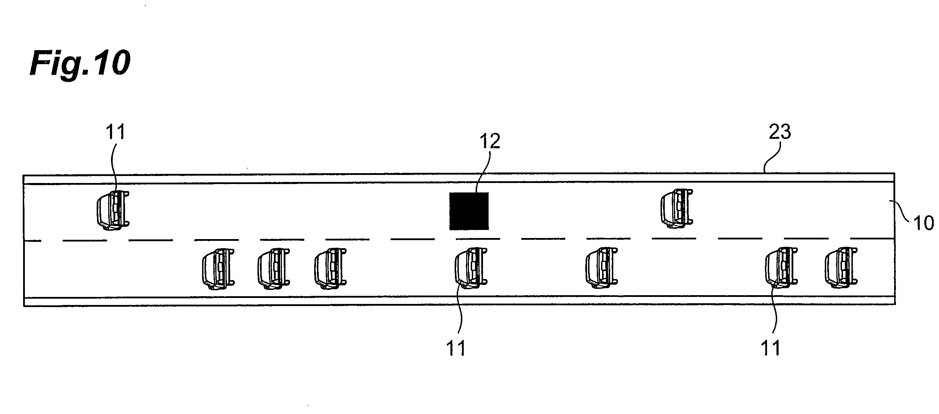

Then the image transformation is carried out at S200 and the image combination at S400. At S400, after completion of the image combination process, special display is effected on an image of specific vehicle 12. The special display means to display the specific vehicle 12 so as to stand out from the other vehicles; for example, as shown in Fig. 10, the image part of the specific vehicle 12 in the synthetic image 23 is displayed while being painted in a striking color such as red, orange, yellow, or the like. In another example; the image of the specific vehicle 12 may be displayed while being surrounded by a frame of a striking color. Furthermore, it is desirable to display specific vehicles 12 in different colors according to the types of the specific vehicles 12. In this case, it becomes easier to identify the specific vehicles 12.

After completion of the image combination process, the synthetic image 23 is transmitted to the control center 6. Then the whole of the synthetic image 23 is displayed on the monitor 61 in the control center 6.

By the image processing apparatus, image processing method, and vehicle surveillance system of the present embodiment, as described above, a plurality of pictures of the road 10 are combined into one synthetic image whereby the area to be subjected to traffic surveillance can be displayed as one screen, without need for switching of screen display; the specific vehicle 12 such as a hazardous material loaded vehicle or the like is displayed by the special display whereby the specific vehicle 12 can be visually detected and observed easier. This implements speedy detection of the specific vehicle 12. It also reduces the load of surveillance by visual inspection.

(Fourth Embodiment)

The following is the description of the image processing apparatus, image processing method, and vehicle surveillance system according to the fourth embodiment.

The vehicle surveillance system of the present embodiment is constructed in much the same configuration as the vehicle surveillance system of the third embodiment, and is provided with an abnormal event detecting sensor in place of the specific vehicle detecting sensor 8, thereby enabling easy detection of an abnormal event on the road 10.

The abnormal event detecting sensor is an abnormal event detecting means for detecting an abnormal event on the road 10; for example, an imaging camera similar to the surveillance cameras 2 is used. Whether there occurs an abnormal event on the road 10 is determined on the basis of a picture taken by the imaging camera, so as to implement detection of the abnormal event.

Here the abnormal event means an event to be observed with special care in view of traffic surveillance; for example, such events include a stop of a vehicle, a refuge run of a vehicle, a fallen object, fire, and so on. It is very important in view of traffic surveillance to quickly detect these abnormal events.

It is preferable in terms of cost reduction of the vehicle surveillance system to use the surveillance cameras 2 as abnormal event detecting sensors as well.

The following is the description of the operation of the vehicle surveillance system, the operation of the image processing apparatus, and the image processing method according to the present embodiment.

The surveillance cameras 2 take pictures of vehicle 11 running on the road 10 and video signals from the respective surveillance cameras 2 are fed into the distributor 3. The distributor 3 supplies the video signals of the surveillance cameras 2 to the image processing apparatus 5 at appropriate timing.

On the other hand, the abnormal event detecting sensor takes a picture of the surveillance area and the picture is fed to the image processing apparatus 5. Then the image processing apparatus 5 performs the image processing of the video signals.

The image processing involves A/D conversion of each video signal fed into the image processing apparatus 5, and detection of an abnormal event.

Thereafter, the aforementioned image transformation and image combination are carried out. After completion of the image combination process, special display is effected on an image of an abnormal event. The special display means to provide the display of the abnormal event so as to stand out from the road 10 and the vehicle 11; for example, the image part of the abnormal event in the synthetic image 23 is displayed while being painted in a striking color such as red, orange, yellow, or the like. The image of the abnormal event may also be displayed while being surrounded by a frame of a striking color. Furthermore, it is desirable to display abnormal events in different colors according to types of the abnormal events. In this case, it becomes easy to recognize which abnormal event is occurring.

After completion of the special display, the synthetic image 23 is then transmitted to the control center 6. Then the whole of the synthetic image 23 is displayed on the monitor 61 in the control center 6.

By the image processing apparatus, image processing method, and vehicle surveillance system of the present embodiment, as described above, a plurality of pictures of the road 10 are combined into one synthetic image whereby the area to be subjected to traffic surveillance can be displayed as one screen, without need for switching of screen display; an abnormal event on the road 10 is displayed by the special display whereby the abnormal event can be readily detected by visual inspection. This implements speedy detection of the abnormal event on the road 10. Since the detection of the abnormal event is carried out readily, it is feasible to reduce the load of surveillance by visual inspection.

(Fifth Embodiment)

The following is the description of the image processing apparatus, image processing method, and vehicle surveillance system according to the fifth embodiment.

The image processing apparatus, image processing method, and vehicle surveillance system of the present embodiment are constructed in much the same configuration as those in the first to fourth embodiments, but are different in that image storage is carried out after the image combination in the image processing means and the image processing step.

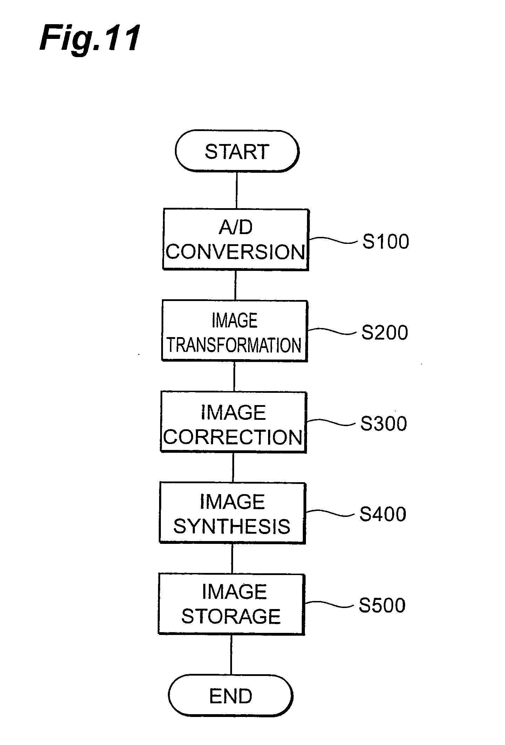

Fig. 11 shows the flowchart of the image processing in the image processing apparatus, image processing method, and vehicle surveillance system according to the present embodiment.

The A/D conversion at S100, the image transformation at S200, the image correction at S300, and the image combination at S400 in Fig. 11 are much the same as those described in the first embodiment and, therefore, the description thereof is omitted herein. At S500, the image storage is carried out. The image storage is carried out by storing the corrected images 22 or the synthetic image 23 into a storage device such as a memory or the like. By storing the corrected images 22 or the synthetic image 23 in this way, it becomes feasible to check the synthetic image in the event of occurrence of traffic anomaly and analyze the occurrence of anomaly.

Industrial Applicability

According to the present invention, as described above, a plurality of pictures of a road is combined into one synthetic image whereby an area to be subjected to traffic surveillance is displayed without need for switching of screen display, so as to prevent the delay in the detection of anomaly; the image of the vehicle in the surveillance area is corrected according to the vehicle height or the like thereof, whereby the image of the vehicle becomes easier on the eyes. This facilitates the detection of traffic anomaly by visual inspection and reduces the load of surveillance.

**Claims**

1. An image processing apparatus comprising: A/D conversion means for receiving input video signals of pictures of a road and effecting A/D conversion from the video signals into digital images; image transformation means for transforming the digital images so as to direct the road along a longitudinal direction or a transverse direction of the digital images; image correction means for extracting a vehicle running on the road in the transformed images transformed by the image transformation means and making a correction for an image of the vehicle according to a vehicle height of the vehicle; and image combination means for combining a plurality of corrected images into such a synthetic image as to make continuous roads displayed in the respective corrected images corrected by the image correction means.

2. The image processing apparatus according to Claim 1, wherein the image correction means makes such a correction that the image of the vehicle is more demagnified with increase in the vehicle height of the vehicle.

3. The image processing apparatus according to Claim 1 or 2, wherein vehicle height data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle height data set for the specified vehicle.

4. The image processing apparatus according to one of Claims 1 to 3, wherein the image correction means makes the correction for the image of the vehicle according to a vehicle width of the vehicle.

5. The image processing apparatus according to Claim 4, wherein vehicle width data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle width data set for the specified vehicle.

6. The image processing apparatus according to one of Claims 1 to 5, wherein the image correction means makes the correction for the image of the vehicle according to a vehicle length of the vehicle.

7. The image processing apparatus according to Claim 6, wherein vehicle length data is set for each vehicle displayed in the digital images or in the transformed images, the aforementioned vehicle is specified upon the correction for the image of the vehicle on the basis of the image of the vehicle, and the correction for the image of the vehicle is made on the basis of the vehicle length data set for the specified vehicle.

8. An image processing method comprising: an A/D conversion step of receiving input video signals of pictures of a road and effecting A/D conversion from the video signals into digital images;an image transformation step of transforming the digital images so as to direct the road along a longitudinal direction or a transverse direction of the digital images; an image correction step of extracting a vehicle running on the road in the transformed images transformed by the image transformation step and making a correction for an image of the vehicle according to a vehicle height of the vehicle; and an image combination step of combining a plurality of corrected images into such a synthetic image as to make continuous roads displayed in the respective corrected images corrected by the image correction step.

9. A vehicle surveillance system comprising: a plurality of imaging means disposed along a road to be observed and configured to take a picture of a vehicle running on the road; vehicle height detecting means set at the road and configured to detect a vehicle height of the vehicle; image processing means configured to receive input video signals of pictures taken by the imaging means, effect A/D conversion from the video signals into digital images, transform the digital images so as to direct the road along a longitudinal direction or a transverse direction of the digital images, extract a vehicle running on the road in the transformed images thus transformed, make a correction for an image of the vehicle according to a vehicle height of the vehicle, and combine a plurality of corrected images into such a synthetic image as to make continuous roads displayed in the respective corrected images thus corrected; and display means configured to display an image resulting from image processing by the image processing means.

10. An image processing apparatus comprising: A/D conversion means for receiving input video signals of pictures of a road and effecting A/D conversion from the video signals into digital images; image transformation means for transforming the digital images so as to direct the road along a longitudinal direction or a transverse direction of the digital images; image combination means for combining a plurality of transformed images into such a synthetic image as to make continuous road images in the respective transformed images transformed by the image transformation means; and special display means for effecting special display on a specific vehicle among vehicles in the synthetic image synthesized by the image combination means.

11. An image processing apparatus comprising: A/D conversion means for receiving input video signals of pictures of a road and effecting A/D conversion from the video signals into digital images; image transformation means for transforming the digital images so as to direct the road along a longitudinal direction or a transverse direction of the digital images; image combination means for combining a plurality of transformed images into such a synthetic image as to make continuous road images in the respective transformed images transformed by the image transformation means; and special display means for effecting special display on an abnormal event on the road in the synthetic image synthesized by the image combination means.

12. The image processing apparatus according to one of Claims 1-7, 10, and 11, comprising storage means for storing the synthetic image in the form of image data.

13. An image processing method comprising: an A/D conversion step of receiving input video signals of pictures of a road and effecting A/D conversion from the video signals into digital images; an image transformation step of transforming the digital images so as to direct the road along a longitudinal direction or a transverse direction of the digital images; an image combination step of combining a plurality of transformed images into such a synthetic image as to make continuous road images in the respective transformed images transformed by the image transformation step; and a special display step of effecting special display on a specific vehicle among vehicles in the synthetic image synthesized by the image combination step.

14. An image processing method comprising: an A/D conversion step of receiving input video signals of pictures of a road and effecting A/D conversion from the video signals into digital images; an image transformation step of transforming the digital images so as to direct the road along a longitudinal direction or a transverse direction of the digital images; an image combination step of combining the plurality of transformed images into such a synthetic image as to make continuous road images in the respective transformed images transformed by the image transformation step; and a special display step of effecting special display on an abnormal event on the road in the synthetic image synthesized by the image combination step.

15. A vehicle surveillance system comprising: a plurality of imaging means disposed along a road to be observed and configured to take a picture of a vehicle running on the road; specific vehicle detecting means configured to detect a specific vehicle on the road; image processing means configured to receive input video signals of pictures taken by the imaging means, effect A/D conversion from the video signals into digital images, transform the digital images so as to direct the road along a longitudinal direction or a transverse direction of the digital images, combine a plurality of transformed images into such a synthetic image as to make continuous road images in the respective transformed images thus transformed, and effect special display on the specific vehicle on the synthetic image; and display means configured to display an image resulting from image processing by the image processing means.

16. A vehicle surveillance system comprising: a plurality of imaging means disposed along a road to be observed and configured to take a picture of a vehicle running on the road; abnormal event detecting means configured to detect an abnormal event on the road; image processing means configured to receive input video signals of pictures taken by the imaging means, effect A/D conversion from the video signals into digital images, transform the digital images so as to direct the road along a longitudinal direction or a transverse direction of the digital images, combine a plurality of transformed images into such a synthetic image as to make continuous road images in the respective transformed images thus transformed, and effect special display on the abnormal event on the synthetic image; and display means configured to display an image resulting from image processing by the image processing means.

17. The vehicle surveillance system according to one of Claims 9, 15, and 16, wherein the image processing means stores the synthetic image in the form of image data.

EP 1 626 582 A2

**Fig.1**

**Fig.2**

**Fig.3**

## *Fig.4*

## *Fig.5*

# *Fig.6*

**Fig.7**

EP 1 626 582 A2

Fig.8

# Fig.9

```
          ┌──────────┐
          │  START   │
          └──────────┘
                │
        ┌───────────────┐
        │     A/D       │
        │  CONVERSION   │─── S100
        └───────────────┘
                │
        ┌───────────────┐
        │  DETECTION    │
        │ OF SPECIFIC   │─── S110
        │   VEHICLE     │
        └───────────────┘
                │
        ┌───────────────┐
        │    IMAGE      │
        │ TRANSFORMATION│─── S200
        └───────────────┘
                │
        ┌───────────────┐
        │    IMAGE      │
        │  SYNTHESIS    │─── S400
        └───────────────┘
                │
          ┌──────────┐
          │   END    │
          └──────────┘
```

# Fig.10

EP 1 626 582 A2

# Fig.11

```
        ┌─────────────┐
        │    START    │
        └──────┬──────┘
               │
        ┌──────┴──────┐
        │     A/D     │
        │ CONVERSION  │──── S100
        └──────┬──────┘
               │
        ┌──────┴──────┐
        │    IMAGE    │
        │TRANSFORMATION│──── S200
        └──────┬──────┘
               │
        ┌──────┴──────┐
        │    IMAGE    │
        │ CORRECTION  │──── S300
        └──────┬──────┘
               │
        ┌──────┴──────┐
        │    IMAGE    │
        │  SYNTHESIS  │──── S400
        └──────┬──────┘
               │
        ┌──────┴──────┐
        │    IMAGE    │
        │   STORAGE   │──── S500
        └──────┬──────┘
               │
        ┌──────┴──────┐
        │     END     │
        └─────────────┘
```